# FASCICULE DE BREVET EUROPEEN

(11) **EP 1 614 310 B1**
(45) Date de publication et mention de la délivrance du brevet: **11.02.2009**
(21) Numéro de dépôt: 04724499.1
(22) Date de dépôt: 31.03.2004
(51) Int. Cl.: H04W 8/18

(54) **ENSEMBLE COMPRENANT UN TELEPHONE MOBILE ET UNE MEMOIRE AUXILIAIRE**
ANORDNUNG MIT EINEM MOBIL TELEFON UND EIN ZUSATZSPEICHER
ARRANGEMENT COMPRISING A MOBILE TELEPHONE AND AN AUXILIARY MEMORY

(30) Priorité: 09.04.2003 BE 200300229
(43) Date de publication de la demande: 11.01.2006
(73) Titulaire: Van Dievoet, Michael, 1640 Rhode-Saint-Genese (BE); Blieck, Edouard Nicolas, 1640 Rhode-Saint-Genese (BE)
(72) Inventeur: Van Dievoet, Michael, 1640 Rhode-Saint-Genese (BE); Blieck, Edouard Nicolas, 1640 Rhode-Saint-Genese (BE)
(74) Mandataire: Quintelier, Claude
(86) Numéro de dépôt international: PCT/BE2004/000046
(87) Numéro de publication internationale: WO 2004/091229

(56) Documents cités:
- EP-A- 0 684 743
- EP-A- 1 175 112
- EP-A2- 1 128 692
- GB-A- 2 378 854
- US-A- 5 689 825

## Description

La présente invention concerne un ensemble comprenant un téléphone mobile alimenté par une source autonome d'énergie, une mémoire auxiliaire et un chargeur agencé pour charger la source d'énergie, lequel téléphone est pourvu d'une mémoire agencée pour y stocker des données de l'opérateur et des données introduites par un titulaire du téléphone, laquelle mémoire et mémoire auxiliaire sont chaque fois équipées d'un organe de lecture et d'écriture pour permettre la lecture et l'écriture de données dans la mémoire respective. La mémoire auxiliaire est associée au chargeur, lequel chargeur est pourvu de moyens d'initialisation reliés auxdits organes de lecture et d'écriture, lesquels moyens d'initialisation sont agencés pour détecter un chargement de la source d'énergie et produire un signal d'initialisation après détection d'un tel chargement,

Un tel ensemble est connu du brevet US-A-5,689,825, Ce brevet décrit un dispositif et une méthode pour décharger du software dans un téléphone portable. Ce déchargement s'effectue simultanément au chargement de la batterie du téléphone. Le software à décharger se trouve dans un serveur qui est relié à une unité de chargement. Dans l'ensemble connu il y a un premier chargeur relié au réseau publique et un deuxième chargeur qui fait partie du téléphone portable. L'utilisateur doit donc brancher son téléphone sur le chargeur particulier pour décharger le software.

Un tel ensemble est également connu de la demande de brevet japonais n° 10243463. Suivant l'ensemble connu, la mémoire auxiliaire est logée dans un boîtier qui comporte également un connecteur permettant d'y brancher le téléphone mobile à l'aide de ses broches de connexion. La mémoire auxiliaire sert à y copier les données qui sont stockées dans la mémoire du téléphone. Ainsi le titulaire du téléphone possède une copie des données stockées dans la mémoire de son téléphone, ce qui lui permet de récupérer ces données dans le cas où pour une raison quelconque il ne serait plus en possession du téléphone et/ou des données stockées dans la mémoire du téléphone.

Un inconvénient de l'ensemble connu est que c'est le titulaire lui-même qui doit prendre l'initiative de brancher son téléphone mobile sur le boîtier afin de permettre la copie des données dans la mémoire auxiliaire. Non seulement le titulaire risque d'oublier de lancer la copie en branchant le téléphone sur le boîtier, ce qui a comme conséquence que le contenu de la mémoire auxiliaire ne soit pas régulièrement mis à jour, mais le titulaire est également obligé d'emporter avec lui le boîtier, par exemple lorsqu'il part en voyage, s'il désire une mise à jour régulière de la mémoire auxiliaire.

L'invention a pour but de réaliser un ensemble comprenant un téléphone portable et une mémoire auxiliaire où le chargement de la mémoire auxiliaire se fait de façon automatique et régulière.

A cette fin un ensemble suivant l'invention est caractérisé en ce que les moyens d'initialisation sont agencés pour activer l'organe de lecture de la mémoire et l'organe d'écriture de la mémoire auxiliaire sous contrôle du signal d'initialisation afin de lire les données de la mémoire et d'écrire dans la mémoire auxiliaire au moins ces données de la mémoire, qui ne seraient pas encore enregistrées dans la mémoire auxiliaire. Puisque la source d'énergie doit régulièrement être chargée à l'aide du chargeur, le fait de détecter un chargement et de produire un signal d'initialisation après détection d'un tel chargement, va permettre de produire régulièrement un signal d'initialisation. Puisque c'est le signal d'initialisation qui activée tant l'organe de lecture de la mémoire du téléphone que l'organe d'écriture de la mémoire auxiliaire, la lecture des données stockées dans la mémoire et l'écriture de ces données lues se fera régulièrement et automatiquement, permettant ainsi une mise à jour régulière de la mémoire auxiliaire. De plus, puisque la mémoire auxiliaire et les moyens d'initialisation sont associés au chargeur, le titulaire les emportera avec lui lorsqu'il emporte son chargeur ne nécessitant ainsi plus d'emporter un boîtier séparé.

Certes le brevet US-A-5,689,825 décrit l'association d'une mémoire et un chargeur et le couplage d'un chargement de software à l'action de charger la batterie du téléphone. Toutefois, dans ce brevet US c'est toujours l'utilisateur qui doit prendre l'initiative de brancher son téléphone sur le chargeur avant que le déchargement du nouveau software est lancé. Même si l'homme du métier trouve dans ce brevet l'enseignement de coupler une mémoire à un chargeur et d'associer le chargement de la batterie à un déchargement de software, rien pour autant dans ce brevet US enseigne l'homme du métier d'utiliser le chargement de la batterie pour lire le contenu de la carte SIM et de procurer ainsi un back-up du contenu de la carte SIM. Contrairement à l'enseignement du brevet US, le problème à solutionner n'est pas celui d'un software opérationnel qui doit être mis à jour, mais celui de fournir une possibilité d'avoir un back-up du contenu de la carte SIM.

Une première forme de réalisation préférentielle d'un ensemble suivant l'invention est caractérisée en ce qu'un code d'identification est stocké dans les mémoires et en ce que les moyens d'initialisation comportent un élément de vérification agencé pour comparer, sous contrôle du signal d'initialisation, les codes stockés dans la mémoire et la mémoire auxiliaire respectivement la première et seconde mémoire et pour produire un signal de neutralisation en cas de non-correspondance des codes d'identification comparés entre eux, laquelle activation de l'organe de lecture et d'écriture est neutralisée sous contrôle du signal de neutralisation. Ce code d'identification est par exemple le code PIN ou PUK attribué à la carte SIM. La présence de l'élément de vérification permet de vérifier si les mémoires concernées portent bien le même code d'identification. Si tel n'est pas le cas, cela signifie que la mémoire auxiliaire ou la première mémoire ne sont pas celles où la copie est normalement stockée. Copier les données n'a dès lors pas de sens et le signal de neutralisation sera produit afin de neutraliser l'activation de l'organe de lecture et d'écriture et d'empêcher ainsi de copier les données.

Une deuxième forme de réalisation préférentielle d'un ensemble suivant l'invention est caractérisée en ce que les moyens d'initialisation sont agencés pour activer l'organe de lecture de la mémoire auxiliaire respectivement de la première mémoire sous contrôle du signal d'initialisation afin de lire les données de ces mémoires, lesquels moyens d'initialisation comportent un comparateur agencé pour recevoir les données lues dans les mémoires respectives, après activation des organes de lecture et pour comparer entre elles les données stockées dans la première et la seconde mémoire respectivement la mémoire et la mémoire auxiliaire et pour repérer sur base de la comparaison les données de la seconde mémoire respectivement de la mémoire, qui ne seraient pas stockées dans la première mémoire respectivement la mémoire auxiliaire et stocker dans la première mémoire respectivement la mémoire auxiliaire que les données repérées. La comparaison des données permet ainsi de ne stocker dans la mémoire auxiliaire ou la première mémoire que ces données qui n'y étaient pas encore stockées.

Une troisième forme de réalisation préférentielle d'un ensemble suivant l'invention est caractérisée en ce que les moyens d'initialisation sont pourvus d'un compteur ayant une entrée pour recevoir le signal d'initialisation, lequel compteur est agencé pour incrémenter un taux de comptage après réception du signal d'initialisation et pour produire un signal de comptage lorsque le taux de comptage a atteint un seuil prédéterminé et un signal d'arrêt lorsque ce taux de comptage n'a pas atteint ledit seuil, lesquels moyens d'initialisation sont agencés pour neutraliser ladite activation des organes de lecture et d'écriture sous contrôle du signal d'arrêt et initialiser le taux de comptage sous contrôle du signal de comptage. Cette forme de réalisation est avantageuse pour les titulaires de téléphone mobile qui ne modifient qu'occasionnellement le contenu de la mémoire du téléphone. En n'effectuant l'opération d'écriture dans la mémoire auxiliaire ou la première mémoire qu'après avoir atteint un nombre prédéterminé de chargement, le nombre de transferts de données est limité.

De préférence, les moyens d'initialisation sont pourvus d'un émetteur agencé pour émettre un message indiquant une écriture dans la mémoire auxiliaire respectivement la première mémoire lorsque des données sont écrites dans ces dernières. L'utilisateur est ainsi averti que l'opération d'écriture est en cours.

Une quatrième forme de réalisation préférentielle d'un ensemble suivant l'invention est caractérisée en ce que les moyens d'initialisation comportent une touche d'activation qui peut être activée par un utilisateur, laquelle touche d'activation est agencée pour produire un signal d'activation après avoir été commandée, lesquels organes d'écriture de la mémoire ou de la seconde mémoire et lesquels organes de lecture de mémoire auxiliaire ou la première mémoire sont activables sous contrôle du signal d'activation pour permettre l'écriture dans la mémoire ou la seconde mémoire des données lues dans la mémoire auxiliaire ou la première mémoire. L'activation de ladite touche permet ainsi de transférer les données sauvegardées dans la mémoire auxiliaire ou la première mémoire vers celle du téléphone et de récupérer ainsi les données sauvées.

L'invention sera maintenant décrite plus en détail à l'aide des dessins qui reprennent des exemples de forme de réalisation d'un ensemble suivant l'invention. Dans les dessins :
les figures 1 a + b illustrent à la fois la forme de réalisation où l'ensemble comporte un chargeur et celle où l'ensemble comporte un ordinateur et un module de communication;
la figure 2 illustre des détails des moyens d'initialisation reliés à la mémoire du téléphone et à la source d'énergie;
la figure 3 illustre un exemple de réalisation d'un détecteur faisant partie des moyens d'initialisation; et
la figure 4 illustre le module de communication en liaison avec les premières et secondes mémoires.

Dans les dessins une même référence a été attribuée à un même élément ou à un élément analogue.

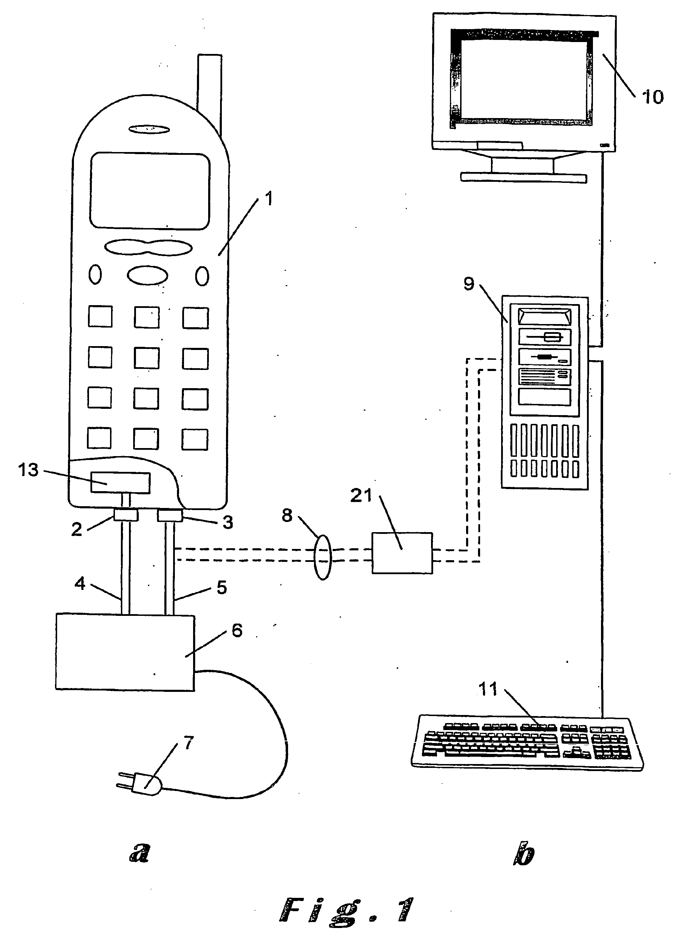

L'ensemble illustré dans la figure 1 a comporte un téléphone mobile 1 pourvu d'une première broche 2 de connexion formant une entrée d'alimentation d'un courant électrique permettant de charger la source autonome d'énergie 13, généralement formée par une batterie rechargeable. La première broche 2 est reliée à l'aide d'un fil 4 à un chargeur 6 agencé pour charger la source d'énergie 13. Le chargeur possède également un fil muni d'une prise 7 permettant de brancher le chargeur sur un réseau électrique. Une deuxième broche 3 forme une interface d'échange de données.

L'ensemble illustré à la figure 1 b se distingue de celui illustré à la figure 1 a en ce qu'à la place du chargeur il y a un ordinateur 9 et un module de communication 21 agencé pour établir une communication de données entre le téléphone et l'ordinateur. Ce dernier étant de préférence équipé d'un clavier 11 et d'un écran de visualisation 10.

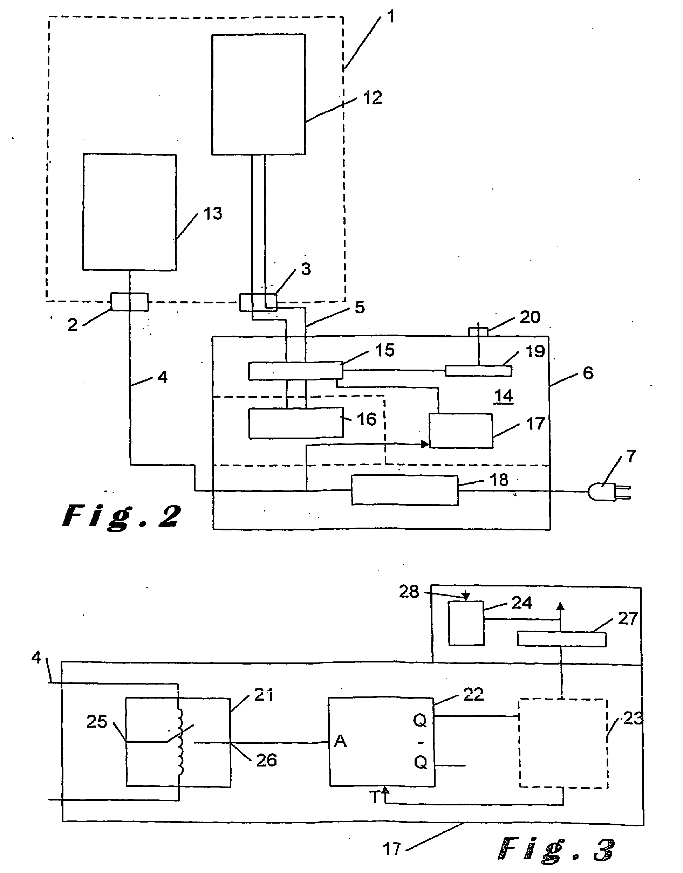

Le chargeur 6 est généralement pourvu d'un transformateur-convertisseur 18, comme illustré à la figure 2, lequel transformateur-convertisseur est agencé pour transformer le courant alternatif fourni par le réseau en un courant continu basse tension. Ce dernier est alors fourni à la source d'énergie 13 afin de la charger.

Dans l'exemple de réalisation illustré à la figure 2, le chargeur est pourvu de moyens d'initialisation 14. Ces derniers peuvent être reliés à la mémoire 12 du téléphone 1 à l'aide de la liaison 5 qui peut être branchée à la deuxième broche 3. Le chargeur 6 est également associé à une mémoire auxiliaire 16. De préférence, les moyens d'initialisation et la mémoire auxiliaire 16 sont incorporés dans le même boîtier que celui qui comporte le transformateur-convertisseur du chargeur. Bien entendu des logements séparés peuvent également être envisagés pour ces différents composants.

La mémoire 12 du téléphone est de préférence formée par la carte SIM et/ou par une mémoire du téléphone agencée pour y stocker des données de l'opérateur et des données introduites par le titulaire du téléphone. Les données sont par exemple le code PIN et PUK, des numéros de téléphone introduits par le titulaire, des images à afficher sur l'écran du téléphone ou d'autres données propres au titulaire et qu'il désire mémoriser. La mémoire auxiliaire 16 est également agencée pour y stocker les mêmes données que celles stockées dans la mémoire 12 du téléphone. Afin de pouvoir lire et écrire des données dans les mémoires 12 et 16, ces dernières sont chacune équipées d'un organe de lecture et d'un organe d'écriture (non repris dans les dessins).

Les moyens d'initialisation sont agencés pour détecter un chargement de la source d'énergie 13 et produire un signal d'initialisation après détection d'un tel chargement. A cette fin ils comportent un détecteur 17 ayant une entrée reliée à la sortie du transformateur-convertisseur 18. Un exemple de réalisation d'un tel détecteur est illustré à la figure 3. Le détecteur comporte un relais 21 dont l'entrée d'excitation est reliée à la ligne 4 sortant du transformateur-convertisseur. Une entrée de courant 25 du relais est reliée à une source d'alimentation en courant qui le cas échéant peut être la ligne 4. Une sortie de courant 26 du relais est reliée à une entrée A d'une bascule 22, dont une sortie Q est reliée à une entrée d'un compteur 23. Il faut toutefois noter que le compteur 23 est optionnel. Ce compteur est agencé pour compter jusqu'à un taux de comptage prédéterminé et pour être remis à zéro ou initialiser lorsque ledit taux de comptage a été atteint. Une sortie du compteur est reliée à une interface 15 et à un émetteur 24 agencé pour émettre un message, comme il sera décrit de façon plus détaillée ci-dessous.

L'interface 15 comprend une mémoire tampon qui le cas échéant peut être pourvue d'un comparateur de données ainsi qu'une unité logique de gestion. L'interface est localisée soit dans le boîtier du chargeur, soit dans le téléphone même. Dans le dernier cas, l'unité logique peut être intégrée dans l'ordinateur du téléphone. Les moyens d'initialisation comportent également une touche d'activation 20, par exemple un bouton pressoir relié à un générateur 19 de signal d'activation.

Supposons maintenant que des données sont stockées dans la mémoire 12 du téléphone et que le titulaire va charger la source d'énergie du téléphone. Pour effectuer cette opération il va brancher le fil 4 du chargeur dans la première broche 2 du téléphone et la fiche 7 dans une prise du réseau électrique. Le chargeur va ainsi charger la source d'énergie en débitant un courant électrique qui va circuler sur la ligne 4. Puisque le détecteur 17 est relié à la ligne 4, le relais 21 va être excité par le courant qui lui est fourni à son entrée et va se fermer fournissant ainsi un signal à l'entrée A de la bascule 22. La bascule va ainsi basculer et fournir un signal au compteur 23 qui va s'incrémenter. L'incrémentation du compteur va produire un signal qui sera fourni à l'entrée T de remise à zéro de la bascule 22, afin de la remettre à l'état initial. Si le compteur a atteint le seuil prédéterminé il va produire un signal de comptage qui sera fourni à un générateur 27 agencé pour produire un signal d'initialisation. Si par contre le compteur n'a pas atteint ledit seuil un signal d'arrêt sera produit qui neutralisera le générateur 27 et ainsi l'opération des moyens d'initialisation.

Au cas où le compteur ne serait pas utilisé, le signal de sortie de la bascule est directement fourni au générateur 27 et il n'y a pas de neutralisation qui se produit. Bien entendu d'autres formes de réalisation du détecteur, par exemple, à l'aide de portes logiques ET ou OU, peuvent être envisagées. L'usage d'un compteur 23 permet de ne pas devoir activer toutes les opérations des moyens d'initialisation lors de chaque chargement de la source d'énergie.

Supposons maintenant que le générateur 27 a produit le signal d'initialisation. Ce dernier est alors fourni à l'interface 15 qui sera activée sous contrôle du signal d'initialisation. Lorsque l'interface n'est pas équipée d'un comparateur, elle va effacer le contenu de la mémoire auxiliaire 16 et activer l'organe de lecture de la mémoire 12 afin de lire les données stockées dans cette dernière. Les données lues sont temporairement stockées dans l'interface 15 qui va également activer l'organe d'écriture de la mémoire auxiliaire. Lorsque cet organe d'écriture est activé, l'écriture des données en provenance de la mémoire 12 se fera dans la mémoire auxiliaire 16. Ainsi les données stockées dans la mémoire 12 du téléphone seront copiées dans la mémoire auxiliaire 16.

Lorsque l'interface 15 est équipée d'un comparateur, le signal d'initialisation va non seulement activer l'organe de lecture de la mémoire 12 mais également celui de la mémoire 16 afin d'également lire les données stockées dans cette dernière mémoire. Le comparateur va alors recevoir les données lues dans les deux mémoires et va les comparer entre elles afin de vérifier lesquelles des données stockées dans la mémoire 12 ne sont pas encore stockées dans la mémoire auxiliaire 16. Ainsi le comparateur va repérer, sur base de la comparaison, les données qui ne seraient pas encore copiées dans la mémoire auxiliaire. Seul les données ainsi repérées seront alors stockées dans la mémoire auxiliaire. Ceci évite de devoir à chaque fois vider l'ensemble de la mémoire auxiliaire 16 et de recopier à chaque fois l'ensemble des données de la mémoire 12 dans la mémoire auxiliaire 16.

Pour signaler au titulaire du téléphone qu'une opération d'écriture est réalisée dans la mémoire auxiliaire, l'émetteur 24 va émettre un message. A cette fin l'émetteur reçoit non seulement le signal d'initialisation, par sa connexion avec la sortie du générateur 27, mais également à son entrée 28 le signal qui active l'organe d'écriture de la mémoire auxiliaire 16. Ainsi aussi longtemps que l'écriture est en cours dans la mémoire auxiliaire, l'émetteur émettra un message. Ainsi le titulaire est averti qu'une écriture a eu lieu dans la mémoire auxiliaire et donc qu'il ne doit pas débrancher le chargeur, sinon l'opération d'écriture est perturbée par manque d'alimentation en courant.

L'émetteur peut comprendre une sirène émettant un signal sonore, ou peut être relié à l'écran du téléphone afin d'y afficher un message par exemple sous forme d'un icone ou d'un message écrit. Suivant une autre alternative l'émetteur comporte un témoin lumineux repris sur le boîtier.

Le but de copier dans la mémoire auxiliaire les données reprises dans la mémoire 12 du téléphone est naturellement de pouvoir, le cas échéant, les copier dans la mémoire 12 par exemple en cas de perte du téléphone. Lorsque l'utilisateur veut copier les données stockées dans la mémoire auxiliaire 16 il va activer la touche d'activation 20 afin d'activer le générateur 19 qui va alors produire un signal d'activation. L'interface 15, qui va recevoir le signal d'activation, va sous contrôle de ce dernier signal, activer l'organe de lecture de la mémoire auxiliaire et l'organe d'écriture de la mémoire 12 du téléphone. Ainsi les données stockées dans la mémoire auxiliaire 16 vont être lues et écrites ensuite dans la mémoire 12. Cette dernière sera ainsi à nouveau munie des données nécessaires à son opération.

Pour empêcher que l'écriture dans la mémoire auxiliaire 16 se fasse uniquement dans une mémoire auxiliaire qui appartient au titulaire, il est préférable de stocker dans la mémoire auxiliaire le code d'identification, par exemple le code PIN et/ou PUK de la carte SIM. Ainsi il est possible de comparer, par exemple à l'aide du comparateur repris dans l'interface 15, les codes d'identification stockés dans les mémoires 12 et 16. Cette comparaison va s'effectuer sous contrôle du signal d'initialisation. Si les codes des deux mémoires correspondent, l'écriture pourra se faire dans la mémoire auxiliaire. Dans le cas contraire l'organe de lecture et d'écriture des mémoires ne sera pas activé ou neutralisé par un signal de neutralisation produit par le comparateur suite à une comparaison négative. Ainsi on évite que lorsque le titulaire charge sont téléphone avec un chargeur qui n'est pas le sien, le contenu de la mémoire de son téléphone soit copié dans une mémoire auxiliaire qui ne lui appartient pas.

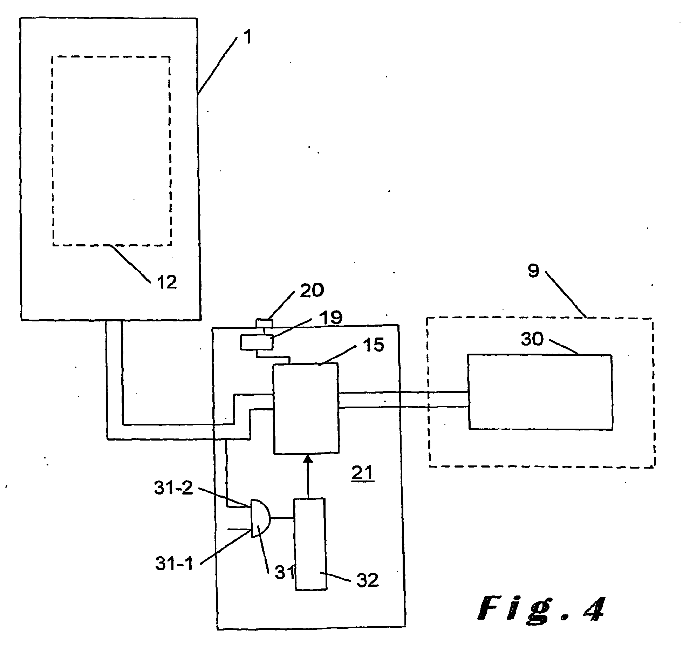

La figure 4 illustre le module de communication 21 en liaison avec une première mémoire 30 de l'ordinateur 9 et une seconde mémoire 12 du téléphone. La première mémoire 30 a une fonction analogue à celle de la mémoire auxiliaire 16 décrite dans l'exemple de réalisation qui vient d'être décrit à savoir stocker une copie des données stockées dans la seconde mémoire 12 du téléphone. Etant entendu que le mode de fonctionnement de cette forme de réalisation est analogue à celui qui vient d'être décrit, seul les différences spécifiques seront décrites. Ainsi les fonctions de comparaison des données et/ou des codes d'identification, l'usage d'un compteur, d'émission d'un message sont analogues et ne seront dès lors plus à nouveau décrits en détail pour cette forme de réalisation. L'interface 15 est localisée soit dans le téléphone, soit dans l'ordinateur même. Dans ce dernier cas, l'unité logique de l'interface est de préférence intégrée dans celle de l'ordinateur.

Le module de communication 21 comporte les moyens d'initialisation qui sont par exemple formés par une porte logique ET 31 reliée à un générateur de signal d'initialisation 32 qui lui est relié à une interface 15. La porte logique reçoit à son tour une entrée 31-1 un signal fixe d'une valeur logique "1". L'autre entrée 31-2 de la porte logique reçoit un signal d'appel en provenance du téléphone indiquant qu'une communication avec l'ordinateur est souhaitée. Ainsi lorsque ce dernier signal est reçu, le générateur 32 est activé produisant ainsi un signal d'initialisation qui est fourni à l'interface 15 qui va alors activer l'organe de lecture de la seconde mémoire 12 et l'organe d'écriture de la première mémoire comme décrit au préalable.

Certains téléphones mobiles possèdent également une fonction agenda. Il va de soi que dans ce dernier cas les données de l'agenda peuvent également être doublées dans la mémoire auxiliaire ou la première mémoire. Le cas échéant il serait même possible de copier uniquement les données de l'agenda au cas où l'agenda n'aurait pas la fonction téléphone. La copie des données se ferait alors de façon analogue à celle qui vient d'être décrite.

## Revendications

1. Ensemble comprenant un téléphone mobile alimenté par une source autonome d'énergie, une mémoire auxiliaire et un chargeur agencé pour charger la source d'énergie, lequel téléphone est pourvu d'une mémoire agencée pour y stocker des données de l'opérateur et des données introduites par un titulaire du téléphone, laquelle mémoire et mémoire auxiliaire sont chaque fois équipées d'un organe de lecture et d'écriture pour permettre la lecture et l'écriture de données dans la mémoire respective, la mémoire auxiliaire étant associée au chargeur, lequel chargeur est pourvu de moyens d'initialisation reliés auxdits organes de lecture et d'écriture, lesquels moyens d'initialisation sont agencés pour détecter un chargement de la source d'énergie et produire un signal d'initialisation après détection d'un tel chargement, **caractérisé en ce que** les moyens d'initialisation sont agencés pour activer l'organe de lecture de la mémoire et l'organe d'écriture de la mémoire auxiliaire sous contrôle du signal d'initialisation afin de lire les données de la mémoire et d'écrire dans la mémoire auxiliaire au moins ces données de la mémoire qui ne seraient pas encore enregistrées dans la mémoire auxiliaire.

2. Ensemble suivant la revendication 1, **caractérisé en ce qu'**un code d'identification est stocké dans les mémoires et **en ce que** les moyens d'initialisation comportent un élément de vérification agencé pour comparer sous contrôle du signal d'initialisation les codes stockés dans la mémoire et la mémoire auxiliaire et pour produire un signal de neutralisation en cas de non-correspondance des codes d'identification comparés entre eux, laquelle activation de l'organe de lecture et d'écriture est neutralisée sous contrôle du signal de neutralisation.

3. Ensemble suivant la revendication 1 ou 2, **caractérisé en ce que** les moyens d'initialisation sont agencés pour activer l'organe de lecture de la mémoire auxiliaire sous contrôle du signal d'initialisation afin de lire les données de ces mémoires, lesquels moyens d'initialisation comportent un comparateur agencé pour recevoir les données lues dans les mémoires respectives après activation des organes de lecture et pour comparer entre elles les données stockées dans la mémoire et la mémoire auxiliaire et pour repérer sur base de la comparaison les données respectivement de la mémoire qui ne seraient pas stockées dans la mémoire auxiliaire et stocker dans la mémoire auxiliaire que les données repérées.

4. Ensemble suivant la revendication 1 ou 2, **caractérisé en ce que** les moyens d'initialisation sont agencés pour effacer le contenu de la mémoire auxiliaire respectivement la première mémoire sous contrôle du signal d'initialisation.

5. Ensemble suivant l'une des revendications 1 à 4, **caractérisé en ce que** les moyens d'initialisation sont pourvus d'un compteur ayant une entrée pour recevoir le signal d'initialisation, lequel compteur est agencé pour incrémenter un taux de comptage après réception du signal d'initialisation et pour produire un signal de comptage lorsque le taux de comptage a atteint un seuil prédéterminé et un signal d'arrêt lorsque ce taux de comptage n'a pas atteint ledit seuil, lesquels moyens d'initialisation sont agencés pour neutraliser ladite activation des organes de lecture et d'écriture sous contrôle du signal d'arrêt et initialiser le taux de comptage sous contrôle du signal de comptage.

6. Ensemble suivant l'une des revendications 1 à 5, **caractérisé en ce que** les moyens d'initialisation sont pourvus d'un émetteur agencé pour émettre un message indiquant une écriture dans la mémoire auxiliaire des données sont écrites dans cette dernière.

7. Ensemble suivant l'une des revendications 1 à 6, **caractérisé en ce que** les moyens d'initialisation comportent une touche d'activation qui peut être activée par un utilisateur, laquelle touche d'activation est agencée pour produire un signal d'activation après avoir été commandée, lesquels organes d'écriture de la mémoire et lesquels organes de lecture de mémoire auxiliaire sont activables sous contrôle du signal d'activation pour permettre l'écriture dans la mémoire des données lues dans la mémoire auxiliaire.

8. Ensemble suivant la revendication 1, **caractérisé en ce que** les moyens d'initialisation comportent une broche de connexion reliée à un fil conducteur relié lui à la mémoire auxiliaire, laquelle broche est compatible avec celle du téléphone donnant accès à la mémoire.

9. Moyens d'initialisation à utiliser dans un ensemble suivant l'une des revendications 1 à 8.

## Claims

1. Set comprising a mobile telephone powered by a self-contained power source, an auxiliary memory and a charger provided for charging the power source, which telephone being provided with a memory arranged to store therein the data of the operator and data introduced by an owner of the telephone, said memory and auxiliary memory being each time equipped with a read and write member to allow the reading and writing of data in the respective memory, the auxiliary memory being associated with the charger, which charger being provided with initialisation means connected to said read and write members, said initialisation means being provided for detecting a charging of the power source and produce an initialisation signal after detection of such a charging, **characterised in that** the initialisation means are arranged to activate the read member of the memory and the write member of the auxiliary memory under the control of the initialisation signal in order to read the data of the memory and to write in the auxiliary memory at least these data of the memory which are not yet recorded in the auxiliary memory.

2. Set according to claim 1, **characterised in that** an identification code is stored in the memories and **in that** the initialisation means comprise a verification element arranged to compare, under the control of the initialisation signal, the codes stored in the memory and the auxiliary memory, in order to produce a neutralisation signal in the event of a non-match of the identification codes compared with each other, said activation of the read and write member being neutralised under the control of the neutralisation signal.

3. Set according to claim 1 or 2, **characterised in that** the initialisation means are arranged so as to activate the read member of the auxiliary memory under the control of the initialisation signal in order to read the data of these memories, said initialisation means comprising a comparator arranged so as to receive data read in the respective memories, after activation of the read members, and to compare with each other the data stored in the memory and the auxiliary memory and to mark on the basis of the comparison the data of the memory which are not stored in the auxiliary memory and to store in the auxiliary memory only the data marked.

4. Set according to claim 1 or 2, **characterised in that** the initialisation means are arranged to delete the content of the auxiliary memory under the control of the initialisation signal.

5. Set according to one of claims 1 to 4, **characterised in that** the initialisation means are provided with a counter having an input for receiving the initialisation signal, said counter being arranged to increment a counting amount after reception of the initialisation signal and to produce a counting signal when the counting level has reached a predetermined threshold and a stop signal when this counting level has not reached the said threshold, said initialisation means being arranged to neutralise the activation of the read and write members under the control of the stop signal and to initialise the counting level under the control of the counting signal.

6. Set according to one of claims 1 to 5, **characterised in that** the initialisation means are provided with a transmitter arranged to transmit a message indicating a writing in the auxiliary memory when data are written in the latter.

7. Set according to one of claims 1 to 6, **characterised in that** the initialisation means comprise an activation key which can be activated by a user, said activation key being arranged to produce an activation signal after having been activated, said write members of the memory and the said read members of the auxiliary memory being able to be activated under the control of the activation signal in order to allow writing in the memory of the data read in the auxiliary memory.

8. Set according to claim 1, **characterised in that** the initialisation means comprise a connection pin connected to a conductive wire itself connected to the auxiliary memory, said pin being compatible with that of the telephone giving access to the memory.

9. Initialisation means to be used in a set according to one of claims 1 to 8.

## Patentansprüche

1. Einheit, die ein Mobiltelefon aufweist, das von einer autonomen Energiequelle gespeist wird, einen Hilfsspeicher und ein Aufladegerät, das eingerichtet ist, um die Energiequelle aufzuladen, wobei das Telefon mit einem Speicher versehen ist, der eingerichtet ist, um Daten des Betreibers und Daten, die von einem Inhaber des Telefons eingegeben werden, zu speichern, wobei der Speicher und der Hilfsspeicher jeweils mit einem Lese- und Schreiborgan versehen sind, um das Lesen und Schreiben von Daten in dem jeweiligen Speicher zu erlauben, wobei der Hilfsspeicher mit dem Aufladegerät verbunden ist, wobei das Aufladegerät mit Initialisierungsmitteln versehen ist, die mit dem Lese- und dem Schreiborgan verbunden sind, wobei die Initialisierungsmittel eingerichtet sind, um ein Laden der Energiequelle zu erfassen und ein Initialisierungssignal zu erzeugen, nachdem ein solches Laden erfasst wurde, **dadurch gekennzeichnet, dass** die Initialisierungsmittel eingerichtet sind, um das Leseorgan des Speichers und das Schreiborgan des Hilfsspeichers unter der Steuerung des Initialisierungssignals zu aktivieren, um die Daten des Speichers zu lesen und in den Hilfsspeicher zumindest die Daten des Speichers zu schreiben, die in dem Hilfsspeicher noch nicht gespeichert sind.

2. Einheit nach Anspruch 1, **dadurch gekennzeichnet, dass** ein Identifikationscode in den Speichern gespeichert ist, und dass die Initialisierungsmittel ein Prüforgan aufweisen, das eingerichtet ist, um unter der Steuerung des Initialisierungssignals die Codes zu vergleichen, die in dem Speicher und dem Hilfsspeicher gespeichert sind, und um ein Neutralisierungssignal in dem Fall der Nichtentsprechung der miteinander verglichenen Identifikationscodes zu erzeugen, wobei das Aktivieren des Lese- und des Schreiborgans unter der Steuerung des Neutralisierungssignals neutralisiert wird.

3. Einheit nach Anspruch 1 oder 2, **dadurch gekennzeichnet, dass** die Initialisierungsmittel eingerichtet sind, um das Leseorgan des Hilfsspeichers unter der Steuerung des Initialisierungssignals zu aktivieren, um die Daten dieser Speicher zu lesen, wobei die Initialisierungsmittel einen Komparator aufweisen, der eingerichtet ist, um die in den jeweiligen Speichern gelesenen Daten nach Aktivieren der Leseorgane zu empfangen und um die gespeicherten Daten, die in dem Speicher und dem Hilfsspeicher gespeichert sind, miteinander zu vergleichen und um auf der Basis des Vergleichs die Daten des Speichers zu erkennen, die nicht in dem Hilfsspeicher gespeichert sind, und um in dem Hilfsspeicher nur die erkannten Daten zu speichern.

4. Einheit nach Anspruch 1 oder 2, **dadurch gekennzeichnet, dass** die Initialisierungsmittel eingerichtet sind, um den Inhalt des Hilfsspeichers unter der Steuerung des Initialisierungssignals zu löschen.

5. Einheit nach einem der Ansprüche 1 bis 4, **dadurch gekennzeichnet, dass** die Initialisierungsmittel mit einem Zähler versehen sind, der einen Eingang hat, um das Initialisierungssignal zu empfangen, wobei der Zähler eingerichtet ist, um eine Zählrate nach dem Empfang des Initialisierungssignals zu inkrementieren und ein Zählsignal zu erzeugen, wenn die Zählrate einen vorbestimmten Schwellenwert erreicht hat, und ein Stoppsignal, wenn diese Zählrate den Schwellenwert nicht erreicht hat, wobei die Initialisierungsmittel eingerichtet sind, um das Aktivieren des Lese- und des Schreiborgans unter der Steuerung des Stoppsignals zu neutralisieren und die Zählrate unter der Steuerung des Zählsignals zu initialisieren.

6. Einheit nach einem der Ansprüche 1 bis 5, **dadurch gekennzeichnet, dass** die Initialisierungsmittel mit einem Sender versehen sind, der eingerichtet ist, um eine Meldung zu senden, die ein Schreiben in dem Hilfsspeicher anzeigt, wenn Daten in diesem Letzteren gespeichert werden.

7. Einheit nach einem der Ansprüche 1 bis 6, **dadurch gekennzeichnet, dass** die Initialisierungsmittel eine Aktivierungstaste aufweisen, die von einem Benutzer aktiviert werden kann, wobei die Aktivierungstaste eingerichtet ist, um ein Aktivierungssignal zu erzeugen, nachdem es befohlen wurde, wobei die Schreiborgane des Speichers und die Leseorgane des Hilfsspeichers unter der Steuerung des Aktivierungssignals aktivierbar sind, um das Schreiben der Daten, die in dem Hilfsspeicher gelesen wurden, in den Speicher zu erlauben.

8. Einheit nach Anspruch 1, **dadurch gekennzeichnet, dass** die Initialisierungsmittel einen Verbindungsstift aufweisen, der mit einem leitenden Leiter verbunden ist, der mit dem Hilfsspeicher verbunden ist, wobei der Stift mit dem des Telefons kompatibel ist, der Zugang zu dem Speicher gibt.

9. Initialisierungsmittel, die in einer Einheit nach einem der Ansprüche 1 bis 8 zu verwenden sind.
